# EUROPEAN PATENT APPLICATION

(11) **EP 1 043 577 A1**
(43) Date of publication of application: **11.10.2000**
(21) Application number: 99302585.7
(22) Date of filing: 01.04.1999
(51) Int. Cl.: G01L 17/00, G01L 9/12, B60C 23/04

(54) **Tire pressure indicator including pressure gauges that have a self-generating power capability**

(71) Applicant: Huang, Tien-Tsai, Pan-Chiao City, Taipei Hsien (TW)
(72) Inventor: Huang, Tien-Tsai, Pan-Chiao City, Taipei Hsien (TW)
(74) Representative: Stonehouse, Sidney William

(57) **Abstract**

A tire pressure indicator comprises a set of pressure gauges (1) respectively installed in the tires of a vehicle, and receiver circuit means (5) installed in the vehicle adjacent to the tires. Each pressure gauge (1) includes a power supplying device (20), a pressure-sensing unit (30), and a transmitter circuit (40). The power-supplying device (20) has a self-generating voltage unit (21) forced by a piezoelectric element (210), a spring element (211), and a weight (212). The spring element (211) is vibrated when the tires of the vehicle are in motion, thereby causing the piezoelectric element (210) to generate power supply. The pressure-sensing unit (30) includes a capacitor means (300) formed by a motion member (31), a conductive member (33), and a converting circuit (34). The motion member (31) is made of electrically conductive material and is moved relative to the conductive member(33) subject to the air pressure of the respective tire, so as to change the capacity of the capacitor means, enabling the converting circuit (34) to output a first signal to the transmitter circuit (40) subject to RC oscillation waveform detected. The transmitter transmits a second signal into the air by radio upon receipt of the first signal.

## Description

### BACKGROUND OF THE INVENTION

### 1. Field of the Invention

The invention relates to a tire pressure indicator, more particularly to one including pressure gauges that have a self-generating power capability.

### 2. Description of the Related Art

A tire pressure indicator is to be installed in a vehicle to monitor the pressure of the tires of the vehicle. A regular tire pressure indicator is generally comprised of a set of pressure gages, each of which is mounted on a corresponding pneumatic tire of the vehicle, and a receiver device. Each pressure gauge wirelessly transmits a pressure signal to the receiver device when the pressure in the corresponding pneumatic tire is not within a predetermined normal operating pressure range. As such, the receiver device can alert the driver of the vehicle in the event of an abnormal tire pressure condition.

Since the receiver device of a known tire pressure indicator is built into an instrument panel of the vehicle, or as a separate device to be installed in the driver's compartment of the vehicle, the power source of the vehicle can be used as the power source for the receiver device. However, since the pressure gauges of the known tire pressure indicator are mounted on the tires of the vehicle, battery cells are used as the power source for the pressure gauges. The need to replace the battery cells when they run out of power inconveniences the owner of the vehicle.

In order to eliminate the aforesaid problem, the same applicant filed an application for a tire pressure indicator, which subsequently issued as U.S. Patent No. 5,694,111. The structure of this tire pressure indicator comprises a piezoelectric type self-generating voltage means, and an LC oscillatory loop formed of a volume variable member, a magnetic core, and an induction coil. This structure of the tire pressure indicator is functional, however, the installation cost of the LC oscillatory loop is expensive.

### SUMMARY OF THE INVENTION

It is an object of the present invention to provide a tire pressure indicator which has self-provided power generating means to provide the necessary working power economically.

It is another object of the present invention to provide a wireless tire pressure indicator, which eliminates radio signal transmission interference.

According to the present invention, the tire pressure indicator comprises a plurality of pressure gauges, at least one receiver circuit adapted to be installed in the vehicle to receive output signal from said pressure gauges wirelessly, and a controller. Each of the pressure gauges comprises a casing, a power supplying device, a pressure sensing unit, and a transmitter circuit. The power-supplying device comprises a self-generating voltage unit. The self-generating voltage unit comprises a spring element having a first end secured to a casing and a second end, a weight securely mounted on the second end of the spring element, and a piezoelectric unit securely mounted on the spring element. The spring element is vibrated upon motion of the respective pneumatic tire, thereby causing the piezoelectric unit to generate a voltage output to the pressure sensing unit and the transmitter circuit. The pressure sensing unit comprises a capacitor means. The capacitor means comprises a motion member, a conductive member, and a converting circuit. The motion member is made of electrically conductive material and is spaced from the conductive member at a distance. The distance between the motion member and the conductive member is changed subject to the air pressure of respective pneumatic tire, thereby causing the capacity of the capacitor means to be changed relatively. The converting circuit comprises an oscillator connected to the capacitor means such that the converting circuit detects the number of RC oscillating waves from the oscillator and converts the detected signal into a first signal indication of the pressure of the respective pneumatic tire. The transmitter circuit receives the first signal from the pressure-sensing unit, and outputs a second signal by radio. A respective receiver circuit is installed in the vehicle adjacent to each pneumatic tire. The motion member comprises a top side wall, a bottom mouth, and a bellows-like peripheral wall connected between the top side wall and the bottom mouth and defining an air chamber in communication with the bottom mouth. The bottom mouth receives air pressure from the respective pneumatic tire for moving the top side wall relative to the conductive member so as to change the capacity of the capacitor means subject to the pressure of the respective pneumatic tire.

### BRIEF DESCRIPTION OF THE DRAWINGS

Other features and advantages of the present invention will become apparent in the following detailed description of the preferred embodiments, with reference to the accompanying drawings, of which:
Figure 1 is a schematic view illustrating the first preferred embodiment of a tire pressure indicator according to the present invention when installed on a vehicle;
Figure 2 is a sectional view of a pressure gauge of the first preferred embodiment;
Figure 3 is a schematic circuit block diagram of the pressure gauge shown in Figure 2;
Figure 4 is a schematic circuit diagram illustrating a rectifying circuit, a charging circuit and a rechargeable cell unit of a power supplying device of the pressure gauge shown in Figure 2;
Figure 5 is an exploded view of a capacitor means for a pressure gauge according to the present invention.
Figure 6 is a sectional view of an assembled capacitor means according to the present invention;
Figure 7 is a schematic circuit block diagram of a receiver circuit of the first preferred embodiment;
Figure 8 is a schematic circuit diagram of the receiver circuit of the first preferred embodiment;
Figure 9 is a schematic circuit block diagram illustrating a controller of the first preferred embodiment of the present invention;
Figure 10 is a sectional view of an alternative form of an assembled capacitor means according to the present invention;
Figure 11 is a sectional view of another alternative form of an assembled capacitor means according to the present invention;
Figure 12 is a sectional view of still another alternative form of an assembled capacitor means according to the present invention;
Figure 13 is a sectional view of still another alternative form of an assembled capacitor means according to the present invention;
Figure 14 illustrates an elastic strap used to secure the pressure gauge to the disk wheel of a pneumatic tire;
Figure 15 is a schematic view illustration the pressure gauge when secured to the metal wheel of a pneumatic tire;
Figure 16 is a partially exploded view illustrating a casing and a coupling seat of a pressure gauge of the third preferred embodiment of the tire pressure indicator according to the present invention; and
Figure 17 is a schematic view illustrating how the coupling seat secures the casing to the disk wheel of a pneumatic tire.

### DETAILED DESCRIPTION OF THE PREFERRED EMBODIMENTS

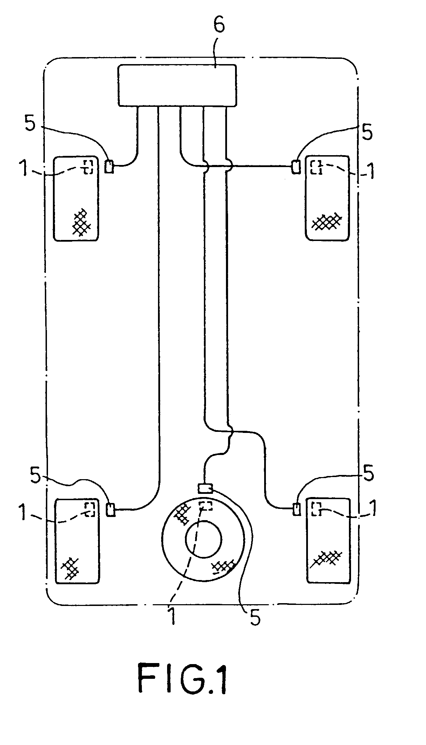

Referring to Figure 1, a first preferred embodiment of the tire pressure indicator according to the present invention is shown, comprised of a set of pressure gauges **1**, a set of receiver circuits **5**, and a controller **6**. Each of the pressure gauges **1** is adapted to be mounted on the inflating valve of a respective one of the pneumatic tires on a vehicle, and wirelessly transmits a pressure signal corresponding to the pressure in the respective one of the pneumatic tires. Each of the receiver circuits **5** is adapted to be mounted on the vehicle adjacent to a respective one of the pneumatic tires so as to receive the pressure signal from the pressure gauge **1** on the adjacent one of the pneumatic tires. The controller **6**, which is preferably built into an instrument panel (not shown) on the vehicle, is connected to the receiver circuits **5**. The controller **6** alerts the driver of the vehicle in the event of an abnormal tire pressure condition.

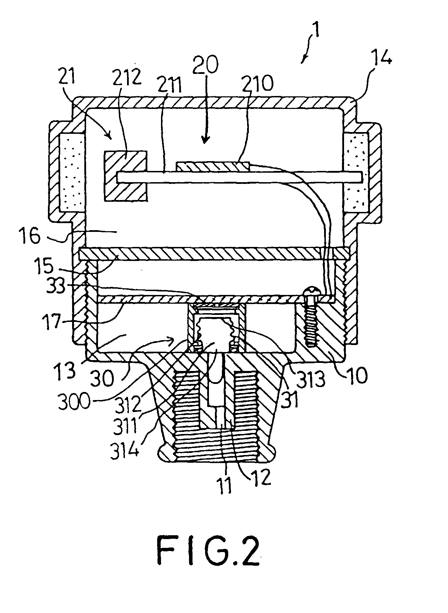

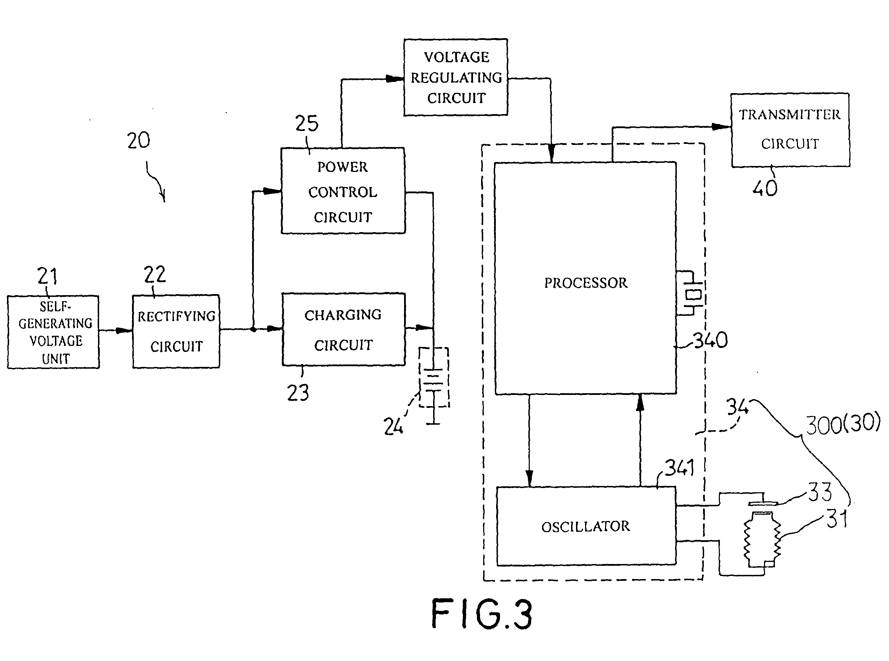

Referring to Figures 2 and 3, the pressure gauge **1** comprises a casing **10** having mounted therein a power supplying device **20**, a pressure sensing unit **30**, and a signal transmitter circuit **40**.

The casing **10** comprises a passage **11** in communication with the inside or air valve of the respective pneumatic tire, a tubular finger piece **12** inserted into the passage **11**. When the pressure gauge **1** is installed in the respective pneumatic tire, the air of the pneumatic tires passes through the passage **11** into the casing **10**, filling a first chamber **13** of the casing **10**. A cap **14** is threadly connected with the casing **10**. A partition plate **15** is mounted in the cap **14**, defining a second chamber **16**. A circuit board **17** is mounted within the first chamber **13**. The pressure sensing unit **30** and the signal transmitter circuit **40** are mounted on the circuit board **17** inside the first chamber **13**.

Referring to Figure 3 again, the power supplying device **20** provides the circuit board **17** with the necessary working power supply, comprised of a self-generating voltage unit **21**, a rectifying circuit **22**, a charging circuit **23**, a stand-by power supplying means, for example a rechargeable cell unit **24**, and a power control circuit **25**. As illustrated in Figure 2, the self-generating voltage unit **21** is disposed in the second chamber **16**, and comprises a piezoelectric unit **210**, a spring plate **211**, and a weight **212**. The spring plate **211** has one end secured to an inner peripheral wall of the second chamber **16**, and the other end fixed with the weight 212. The weight **212** enables the spring plate **211** to produce a broad amplitude of vibration. When the pneumatic tires of the vehicle are rotated, the spring plate **211** of the self-generating voltage unit **21** is forced to vibrate continuously, causing the piezoelectric unit **210** to produce a piezoelectric effect and generate an AC voltage output.

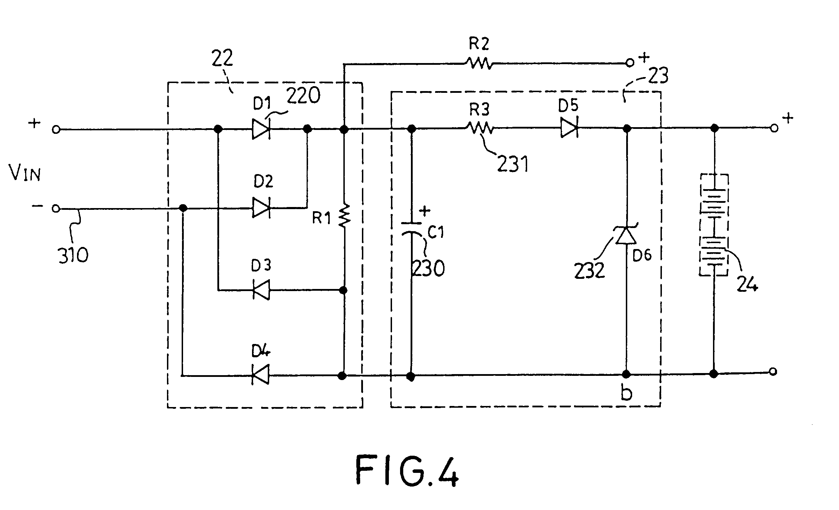

Referring to Figure 4, the rectifying circuit **22** is a full-wave rectifier, comprised of four diodes **D1∼D4** for rectifying AC power supply from the piezoelectric unit **210** into DC power supply. The charging circuit **23** comprises a voltage storing member **230** (for example, a capacitor), a current limiter **231** (for example, a current limit diode), and a protective member **232** (for example, a zener diode). The rectifying circuit **22** charges the voltage-storing member **230**. The current limiter **231** limits the amount of current flowing from the rectifying circuit **22** to the rechargeable cell unit **24**. The protective member **232** limits the voltage passing through the rechargeable cell unit **24**.

Referring to Figures 3 and 4 again, the rechargeable cell unit **24** is connected to the output end of the charging circuit **23**, so as to be charged by the self-generating voltage unit **21**. The rechargeable cell unit **24** provides the necessary working power supply when the vehicle is temporarily stopped. The power control circuit **25** is connected to the rectifying circuit **22**. The power control unit **25** electrically disconnects the rechargeable cell unit **24** from the pressure sensing unit **30** and the signal transmitter unit **40** a certain length of time after the pneumatic tire has been stopped, the self-generating voltage unit **21** has been turned off, and the output of the rectifying circuit **22** has reached zero voltage.

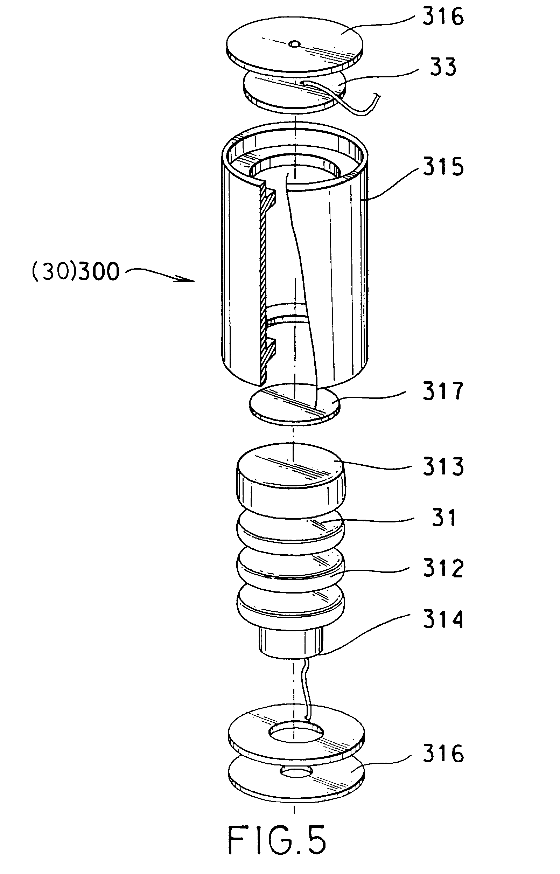

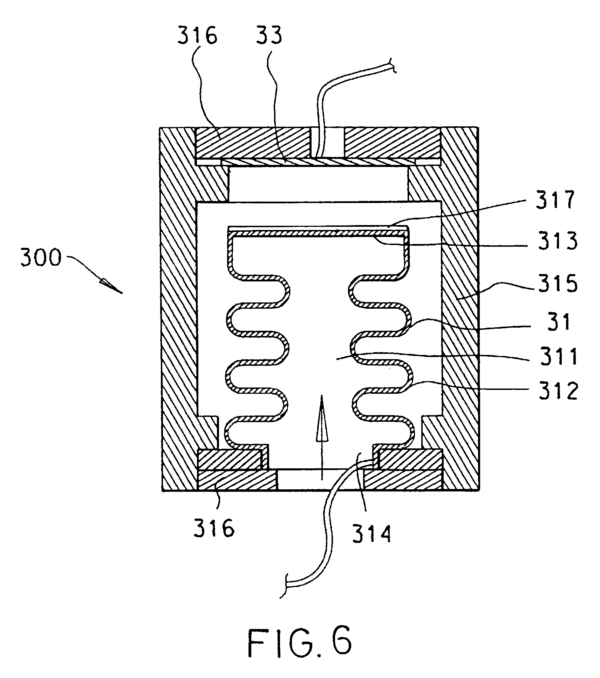

Referring to Figures 5 and 6, and to Figures 2 and 3 again, the pressure sensing unit **30** comprises a capacitor means **300**. The capacitor means **300** comprises a motion member **31**, a conductive member **33**, and a converting circuit **34**. The conductive member **33** is, for example, a thin copper plate mounted in between the passage **11** and the first chamber **13**. The motion member **31** comprises an air chamber **311**, a plurality of bellows **312** around the air chamber **311**, a top wall **313**, and a bottom mouth **314**. The bottom mouth **314** enables air to pass into the air chamber **31** and to inpact on the top wall **313**, causing the distance between the top wall **313** and the conductive member **33** to be changed, so as to further change the capacity of the capacitor means **300**. The motion member **31** and the conductive member **33** are mounted within an insulative shell **315**, and are spaced from each other at a distance. Insulative covers **316** are respectively placed on the top and bottom sides of the insulative shell **315.** An insulator **317** is set between the motion member **31** and the conductive member **33** to prevent a short circuit.

The converting circuit **34** comprises a processor **340**, and an oscillator **341**. The capacitor means **300** is connected to the oscillator **341** so that when the distance between the top wall **313** and the conductive member **33** is changed, the output RC oscillating frequency of the oscillator **341** is relatively changed. The processor **340** detects the oscillating frequency output of the oscillator **341**, and converts the same into a corresponding pressure value. The processor **340** then controls the signal transmitter circuit **40** to transmit a second signal of radio signal indication of the pressure value.

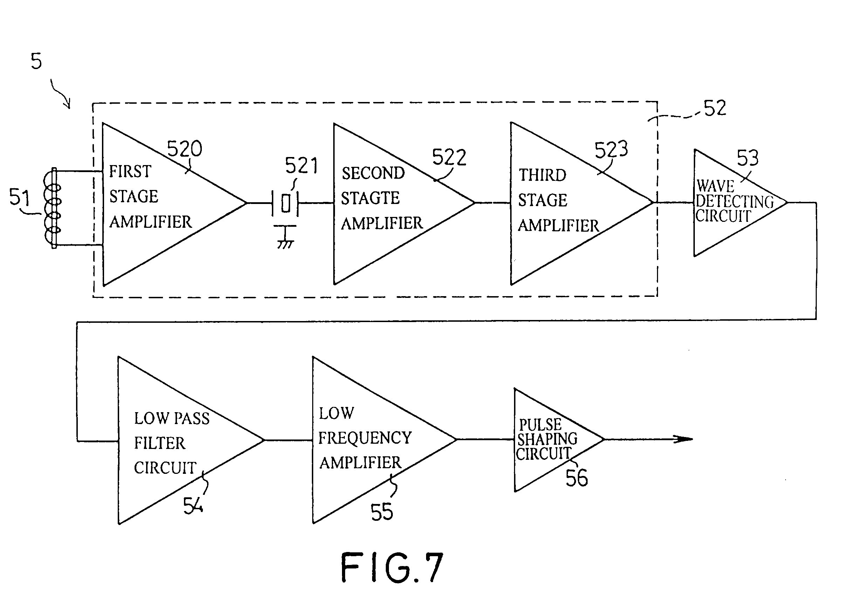

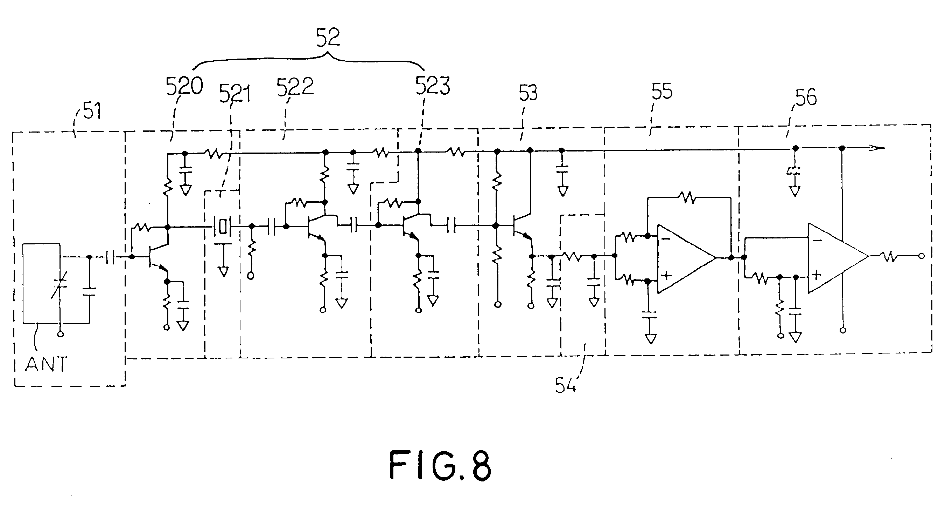

Referring to Figures 7 and 8, and to Figure 1 again, each of the receiver circuits **5** is adapted to be mounted on the vehicle adjacent to a respective one of the pneumatic tires so as to receive the pressure signal from the pressure gauge **1** on an the adjacent pneumatic tire with minimal signal interference, thereby improving the accuracy of the tire pressure indicator of this invention. Each receiver circuit **5** comprises a receiving antenna **51**, a high frequency amplifying circuit **52**, a wave detecting circuit **53**, a low pass filter circuit **54**, a low frequency amplifier **55**, and a pulse shaping circuit **56**.

The receiving antenna **51** receives the pressure signal from the pressure gauge **1** on an adjacent pneumatic tire and provides the same to the high frequency amplifying circuit **52**. The high frequency amplifying circuit **52** comprises a first stage amplifier **520** connected to the receiving antenna **51**, a filter **521** connected to the first stage amplifier **520**, a second stage amplifier **522** connected to the filter **521**, and a third stage amplifier **523** connected to the second stage amplifier **522**. The wave detecting circuit **53** is connected to the high frequency amplifying circuit **52**. The low pass filter circuit **54** is connected to the wave detecting circuit **53**. The low frequency amplifier **55** is connected to the low pass filter circuit **54**. The pulse shaping circuit **56** is connected to the low frequency amplifier **55**. The analog voltage output of the low frequency amplifier **55** is processed into a digital third signal by the pulse shaping circuit **56**.

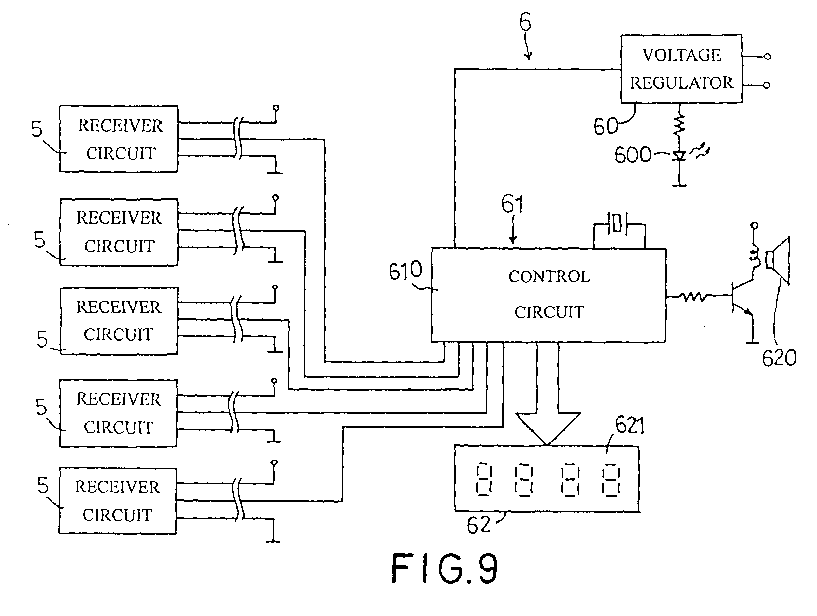

Referring to Figure 9, the controller **6** is shown, comprised of a voltage regulator **60,** a control circuit **61**, and an indicating unit **62**.

The voltage regulator **60** is adapted to be connected to the power source (not shown) of the vehicle, and provides an operating voltage to the control circuit **61** and the indicating unit **62**. A light emitting diode **600** is connected to the voltage regulator **60**, and is operable so as to emit light when power is supplied to the controller **6**. The control circuit **61**, such as a microprocessor, is connected to the receiver circuits **5** and processes the digital pulse signals therefrom to obtain the pressure values of the pneumatic tires. The indicating unit **62** is connected to the control circuit **61**, and includes a sound alarm unit **620** and a display unit **621**. The sound alarm unit **620** is activated by the control circuit **61** when the pressure value in any of the pneumatic tires is not within a normal operating pressure range. The display unit **621** can be a liquid crystal display or a light emitting diode display, and is activated by the control circuit **61** to identify the abnormal pneumatic tire(s), the pressure value of which is not within the normal operating pressure range. The display unit **621**, which can be an LCD or LED, is further activated by the control circuit **61** to display the pressure value of the abnormal pneumatic tire(s).

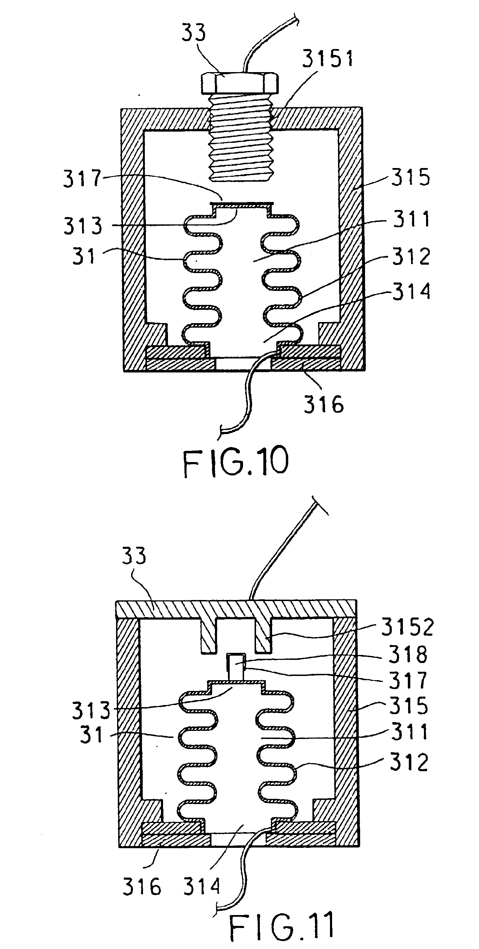

Figure 10 shows a second embodiment of the capacitor means **300a** according to the present invention. This alternative form is similar to the aforesaid first embodiment with the exception of the conductive member **33**. According to this alternative form, the conductive member **33** is a metal screw member threaded into a screw hole **3151** at the insulative shell **315**. By turning the conductive member **33** up and down in the screw hole **3151**, the capacity of the capacitor means **300** is easily preadjusted relatively.

Figure 11 shows a third embodiment of the capacitor means **300b** according to the present invention. According to this alternative form, the conductive member **33** comprises a tubular flange **3152** extended downwardly from its bottom side wall, a rod **318** is raised from the top wall **313** of the motion member **31** and suspended in the tubular flange **3152**. When the volume of the motion member **31** is changed, the elevation of the rod **318** in the tubular flange **3152** is relatively changed, and therefore the capacity of the capacitor means **300** is changed relatively.

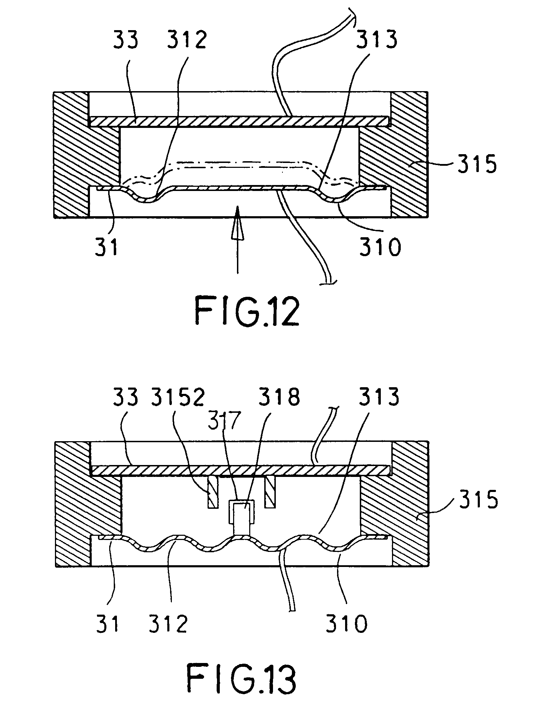

Figure 12 shows a fourth embodiment of the capacitor means **300c** according to the present invention. According to this alternative form, the motion member **31** is a thin copper diaphragm having corrugated portions **312**, a top side wall **313** and a bottom side wall **310**. The bottom side wall **310** receives air pressure from the respective pneumatic tire, enabling the distance between the top side wall **313** and the conductive member **33** to be relatively changed, subject to the value of the air pressure received, so as to relatively change the capacity of the capacitor means **300**.

Figure 13 shows a fifth embodiment of the capacitor means **300d** according to the present invention. According to this alternative form, the conductive member **33** comprises a tubular flange **3152** extended downwardly from its bottom side wall, a rod **318** is raised from the top side wall **313** of the motion member **31** and suspended in the tubular flange **3152**.

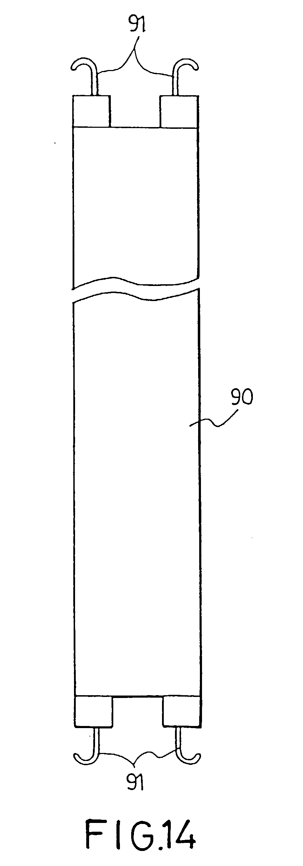

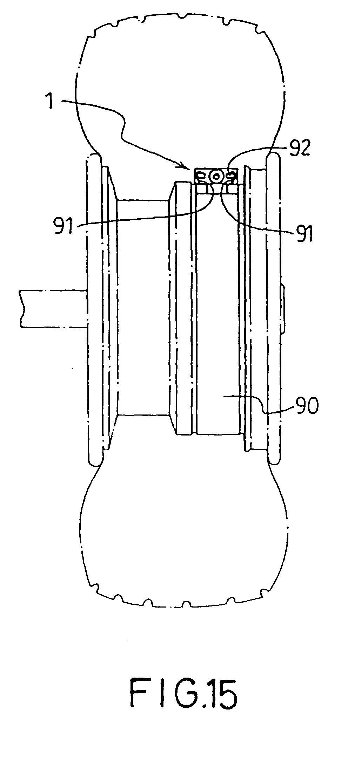

Referring to Figures 14 and 15, an elastic strap **90** is provided with two hooks **91** at its two opposite ends for engaging respective holes **92** at the casing **10** and the cap **14** so as to secure the pressure gauge **1** to the metal wheel of the respective pneumatic tire, enabling the pressure gauge **1** to detect the pressure of the respective pneumatic tire.

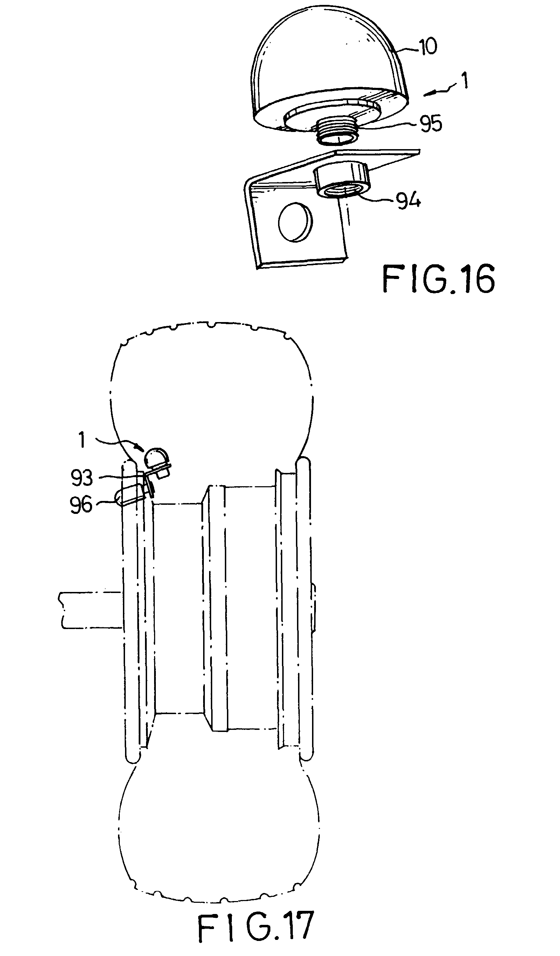

Referring to Figures 16 and 17, a substantially L-shaped coupling seat **93** is mounted on the rim of the pneumatic tire. The coupling seat **93** is at one side fixed with the air valve **96** of the pneumatic tire, and at an opposite side formed with a coupling portion, such as an inner thread **94**. The casing **10** of the pressure gauge **1** has a coupling portion, such as an outer thread **95**, for being engaged with the coupling portion **94**.

Since the pressure gauges of the tire pressure indicator of this invention are capable of generating power when the pneumatic tires are in motion, the possibility that the pressure gauges will run out of power can be eliminated so as to ensure proper operation of the pressure gauges without causing any inconvenience to the owner of the vehicle. The purpose of the present invention is thus achieved.

While the present invention has been described in connection with what is considered the most practical and preferred embodiments, it is understood that this invention is not limited to the disclosed embodiments, but is intended to cover various arrangements included within the spirit and scope of the broadest interpretation of the present invention so as to encompass all such modifications and equivalent arrangements.

## Claims

1. A tire pressure indicator for the pneumatic tires of a vehicle, said tire pressure indicator comprising a plurality of pressure gauges (1) and at least one receiver circuit (5) adapted to be installed in the vehicle to receive output signal from said pressure gauges wirelessly, and characterised in that it includes a controller (6) and said pressure gauges each comprise a casing (10), a power supply device (20), a pressure sensing unit (30) and a transmitter circuit (40),
said power supplying device (20) comprising a self-generating voltage unit (21), said self-generating voltage unit comprising a spring element (21) having a first end secured to said casing (10) and a second end, a weight (212) securely mounted on the second end of said spring element, and a piezoelectric unit (210) securely mounted on said spring element (211), said spring element being vibrated upon motion of the respective pneumatic tire, thereby causing said piezoelectric unit (210) to generate a voltage output to said pressure sending unit (30) and said transmitter circuit (40);
said pressure sensing unit (30) comprising a capacitor means(300), said capacitor means comprising a motion member (31), a conductive member (33), and a converting circuit (34), said motion member (31) being made of electrically conductive material and spaced from said conductive member (33) at a distance, said distance being changed subject to the air pressure of respective pneumatic tire, thereby causing the capacity of said capacitor means (300) to be changed relatively, said converting circuit (34) comprising an oscillator (341) connected to said capacitor means such that said converting circuit detects the number of RC oscillating waves from said oscillator (341) and converts detected signal into a first signal indication of the pressure of the respective pneumatic tire;
said transmitter circuit(40) receiving said first signal from said pressure sensing unit (30) and outputing a second signal by radio;
said receiver circuit (5) outputing a third signal upon receipt of said second signal, and
said controller (6) comprising a control circuit (61) and an indicator circuit (62), said control circuit receiving said third signal from said pressure gauges (1) and processing said third signal into an indication signal through a processor thereof for output through said indicator circuit (62).

2. A tire pressure indicator according to claim 1, characterised in that said motion member (31) comprises a top side wall (313), a bottom mouth (314), a bellows-like peripheral wall connected between said top side wall and said bottom mouth, and defining an air chamber (311) in communication with said bottom mouth, and bottom mouth (314) receiving air pressure from the respective pneumatic tire for enabling said top side wall (313) to be moved relative to said conductive member (33), so as to change the capacity of said capacitor means (300) subject to the pressure of the respective pneumatic tire.

3. A tire pressure indicator according to claim 1, characterised in that said motion member (31) is a corrugated metal sheet (312) having a top side wall (313) facing said conductive member (33), and a bottom side wall (310), which receives pressure from the respective pneumatic tire for enabling the distance between said top side wall and said conductive member to be changed subject to the air pressure of the respective pneumatic tire, so as to change the capacity of said capacitor means (300).

4. A tire pressure indicator according to any preceding claim, characterised in that the number of said at least one receiver circuit (5) is equal to the number of said pressure gages (1), and each receiver circuit (5) is respectively installed in the vehicle adjacent to one respective pneumatic tire to receive the second signal from the corresponding pressure gauge (1).

5. A tire pressure indicator according to any preceding claim, characterised in that said power supplying device (20) comprises a stand-by power supply unit (24).

6. A tire pressure indicator according to claim 5, characterised in that said stand-by power supply unit (24) is a rechargeable storage battery.

7. A tire pressure indicator according to any preceding claim, characterised in that said power supplying device (20) further comprises a charging circuit (23) to boost the voltage of power supply generated by the self-generating voltage unit (21).

8. A tire pressure indicator according to claim 7 characterised in that said power supplying device (20) further comprises a power saving control circuit (25) to turn off said stand-by power supply unit for a predetermined length of time after said self-generating voltage unit (21) does no work.

9. A tire pressure indicator according to any preceding claim, characterised in that said motion member (31) is made of flexible material.

10. A tire pressure indicator according to any preceding claim, characterised in that said receiver circuit (5) comprises a receiving antenna (51), a high frequency amplifying circuit (52), a wave detecting circuit (53), a low frequency amplifier (55), and a pulse shaping circuit (56), said receiving antenna (51) receiving said second signal, enabling the received signal to be processed through said high frequency amplifying circuit (52), said wave detecting circuit (53), said low frequency amplifier (55) to said pulse shaping circuit (56) for waveform shaping, so that said pulse shaping circuit (56) outputs a third signal indication of the value of air pressure in the respective pneumatic tire.
